# EUROPÄISCHE PATENTANMELDUNG

(11) **EP 1 053 833 A2**
(43) Veröffentlichungstag der Anmeldung: **22.11.2000**
(21) Anmeldenummer: 00108283.3
(22) Anmeldetag: 14.04.2000
(51) Int. Cl.: B25B 9/00, H01R 43/00, H02G 1/14

(54) **Montagewerkzeug**

(30) Priorität: 16.04.1999 DE 29906889 U
(71) Anmelder: Connectool GmbH & Co., 32758 Detmold (DE)
(72) Erfinder: Klampt, Elke, 32760 Detmold (DE); Hetland, Detlev, 32760 Detmold (DE)
(74) Vertreter: TER MEER STEINMEISTER & PARTNER GbR

(57) **Zusammenfassung**

Die Erfindung betrifft ein Montagewerkzeug zum Anbringen längsgeschlitzter Hülsenelemente auf strangförmigem Gut, insbesondere zum Anbringen längsgeschlitzter Markierhülsen (39) auf Kabeln (43), mit zwei einander gegenüberliegenden Greifelementen (19), die hakenförmig gegeneinander umgebogene freie Enden (38) aufweisen.

## Beschreibung

Die Erfindung betrifft ein Montagewerkzeug zum Anbringen längsgeschlitzter Hülsenelemente auf strangförmigem Gut, insbesondere ein Motagewerkzeug zum Anbringen längsgeschlitzter Markierungshülsen auf Kabeln, Leitern oder dergleichen.

Hülsen oder Hülsenelemente, die auf strangförmigem Gut, wie beispielsweise auf Kabeln, isolierten Leitern oder Drähten, Seilen oder dergleichen, montiert werden sollen, lassen sich relativ einfach auf das strangförmige Gut aufschieben, sofern wenigstens ein Ende davon frei ist. Liegen jedoch keine freien Enden des strangförmigen Guts vor, so können nur längsgeschlitzte Hülsenelemente aufgebracht werden, die entweder aus plastisch oder elastisch verformbaren Material bestehen.

Bei Hülsenelementen aus plastisch verformbaren Material ist der Längsschlitz vor der Montage so breit, daß das Hülsenelement auf das strangförmige Gut aufgesetzt und danach mit einem zangenförmigen Quetschwerkzeug aufgequetscht werden kann.

Besteht das Hülsenelement aus einem elastisch verformbaren Material, so wird der Längsschlitz des Hülsenelements zur Montage so aufgeweitet, daß das Hülsenelement auf das strangförmige Gut, also auf ein Kabel oder dergleichen, aufgebracht werden kann. Das aufgebrachte Hülsenelement kehrt dann im wesentlichen in seine ursprüngliche Form zurück und sitzt damit auf dem strangförmigen Gut.

Zur Markierung von Kabeln und Leitern sind bereits Markierungshülsen bekannt, die aus einem elastisch verformbaren Material bestehen und einen Längsschlitz zum Aufsetzen auf Kabel oder Leiter aufweisen. Der Innendurchmesser der Markierungshülsen ist dabei entsprechend den zu markierenden Kabeln oder Leitern so dimensioniert, daß die Markierungshülsen nach dem Aufsetzen nicht vollständig in ihre ursprüngliche Form zurückkehren können, so daß sie fest auf dem jeweiligen Kabel oder Leiter aufgeklemmt sind und in Längsrichtung des Kabels oder Leiters kraftschlüssig gehalten werden. Auf diese Weise lassen sich Markierungshülsen unverlierbar auf Kabeln oder Leitern befestigen.

Zum Anbringen derartiger Markierungshülsen auf Kabeln oder Leitern können die bekannten Markierungshülsen einfach von Hand auf den Leiter aufgesetzt werden, wobei der Leiter selbst zum Aufweiten des Längsschlitzes benutzt wird. Wenn nur eine geringe Anzahl von gut zugänglichen Leitern zu markieren ist, ist dies eine einfache und gangbare Methode.

Soll jedoch eine große Anzahl von Leitern markiert werden, so kann ein spezielles Montagewerkzeug eingesetzt werden, dessen eines Ende an dem zu markierenden Leiter festgehalten wird und auf dessen anderes Ende die Markierungshülse aufgesetzt wird, um dann auf diesem Montagewerkzeugs so verschoben zu werden, daß sich der Längsschlitz der Markierungshülse entlang einer keilförmigen Rampe aufweitet, so daß die Markierungshülse über das Kabel oder den Leiter geschoben werden kann.

Dieses bekannte Montagewerkzeug erleichtert zwar die Anbringung von Markierungshülsen auf Leitern, läßt sich aber praktisch nicht einsetzen, wenn die zu markierenden Kabel oder Leiter nicht frei zugänglich sind, wie dies in Schaltschränken und bei Elektromaschinen und -motoren häufig der Fall Ist. Um hier Abhilfe zu schaffen, ist es zwar möglich, die Markierung der einzelnen Kabel oder Leiter bereits werkseitig vorzunehmen. Treten dann jedoch im Laufe der weiteren Entwicklung Änderungen der Schaltpläne auf, die auch bei bereits in der Montage befindlichen Schaltungen von Elektromaschinen oder -motoren berücksichtigt werden müssen, so ist es erforderlich, die vorhandenen Markierungen durch neue zuersetzen.

Zum Entfernen der Markierungshülsen brauchen die Leiter oder Kabel nur durchgebogen zu werden, so daß die Markierungshülsen dann zwangsweise abspringen.

Der Erfindung liegt die Aufgabe zugrunde, ein Montagewerkzeug bereitzustellen, das eine einfache Montage längsgeschlitzter Hülsenelemente auf strangförmigem Gut, insbesondere eine einfache Anbringung längsgeschlitzter Markierungshülsen auf Kabeln oder dergleichen ermöglicht.

Diese Aufgabe wird durch das Montagewerkzeug nach Anspruch 1 gelöst. Vorteilhafte Weiterbildungen und Ausgestaltungen der Erfindung sind in den Unteransprüchen beschrieben.

Nach einer Ausgestaltung der Erfindung ist zwischen den einander gegenüberliegenden Greifelementen ein verschiebbarer Stempel angeordnet. Die Greifelemente besitzen dabei die hakenförmige Enden, mit denen sie in einen Schlitz eines Hülsenelements, insbesondere in den Längsschlitz einer Markierungshülse eingreifen können, wenn diese zwischen ihnen angeordnet ist. Wird der Stempel verschoben, so werden die Greifelemente gegen eine Federkraft auseinander gedrückt, während der Stempel bei Verschiebung in Richtung der hakenförmigen Enden ein zwischen den Greifelementen befindliches Hülsenelement gegen die hakenförmigen Enden drückt und mit diesen In Eingriff hält. Dabei spreizen die in den Längsschlitz des Hülsenelements eingreifenden hakenförmigen Enden der Greifelemente, die vom Stempel auseinander gedrückt werden, den Längsschlitz des Hülsenelements auf, so daß dieses auf ein strangförmiges Gut aufgesetzt werden kann.

Die Erfindung schafft also auch ein Montagewerkzeug, mit dem ein längsgeschlitztes Hülsenelement, insbesondere eine Markierungshülse mit Längsschlitz, aufgespreizt werden kann, indem eine Verschiebebewegung in eine quer dazu liegende Aufspreizbewegung umgesetzt wird. Hierdurch wird es ermöglicht, das Montagewerkzeug auch dann relativ schmal auszubilden, wenn es eine große Länge aufweist, um auch schwer zugängliche Leiter oder Kabel markieren zu können.

Bei einer bevorzugten Ausgestaltung der Erfindung ist vorgesehen, daß der Stempel aus einer Mittelstellung von den hakenförmigen Enden der Greifelemente weg in eine Freigabestellung und zu diesen hin in eine Montagestellung bewegbar ist, wobei der Stempel die Greifelemente sowohl in der Freigabe- als auch in der Montagestellung auseinander drückt. Die Ausbildung der Freigabe- und der Montagestellung zu beiden Seiten der Mittelstellung, in der die Greifelemente nicht vom Stempel auseinander gedrückt sind, ermöglicht das Aufspreizen der Greifelemente mit und ohne Beaufschlagung eines zwischen den Greifelementen angeordneten Hülsenelements durch den Stempel.

Wird also der Stempel aus der Mittelstellung von den abgebogenen Enden der Greifelemente weg in die Freigabestellung bewegt, so werden nur die Greifelemente aufgespreizt, um entweder ein zwischen ihnen befindliches Hülsenelement freizugeben oder um ein Hülsenelement zu ergreifen. Wird andererseits der Stempel in Richtung der freien Enden der Greifelemente verschoben, so spreizt er nicht nur die Greifelemente auf, sondern drückt auch gleichzeitig ein zwischen den Greifelementen befindliches Hülsenelement mit seinen Schlitzrändern in die hakenförmigen Endbereiche der Greifelemente, so daß die voneinander weggedrückten Enden der Greifelemente den Längsschlitz des Hülsenelements aufweiten, um das Hülsenelement auf ein Kabel aufsetzen oder davon abziehen zu können.

Das erfindungsgemäße Montagewerkzeug ermöglicht also das einfache Aufbringen und Abziehen von längsgeschlitzten Markierungshülsen auf bzw. von Kabeln oder Leitern, wobei die abgezogenen Markierungshülsen einfach einer Abfallbeseitigung zugeführt oder gegebenenfalls auch erneut verwendet werden können.

Um die Handhabung des Montagewerkzeugs zu vereinfachen ist vorgesehen, daß sowohl die Freigabe- als auch die Montagestellung des Stempels durch Anschläge festgelegt sind.

Um die Verschiebebewegung des Stempels einfach und zuverlässig in eine quer dazuliegende Aufspreizbewegung der Greifelemente umsetzen zu können, ist bei einer vorteilhaften Weiterbildung der Erfindung vorgesehen, daß der Stempel einen Steuerabschnitt mit seitlichen Steuerflächen aufweist, die mit entsprechenden Gegenflachen an den Greifelementen zusammenwirken, um die relative Lage der Greifelemente zueinander quer zur Verschieberichtung des Stempels entsprechend der Stellung des Stempels zu steuern. Die erfindungsgemäßen Steuerflächen am Stempel, die mit entsprechenden Gegenflächen an den Greifelementen zusammenwirken, können so gestaltet werden, daß die Verschiebebewegung des Stempels ohne großen Kraftaufwand durchgeführt werden kann.

Hierbei ist es insbesondere möglich, daß die seitlichen Steuerflächen am Stempel, die ein Aufspreizen der Greifelemente bei der Bewegung des Stempels in die Freigabestellung bewirken, relativ steil sind, so daß der Stempel aus der Mittelstellung nicht ohne den bewußten Einsatz einer äußeren Kraft in seine Freigabestellung bewegen kann. Umgekehrt können die Steuerflächen für das Aufspreizen der Greifelemente bei der Verschiebung des Stempels in seine Montagestellung relativ flach sein, da eine ungewollte Verschiebung des Stempels bei eingesetztem Hülsenelement durch das Hülsenelement selbst verhindert wird, während die relativ flachen Steuerflächen ein Aufweiten der Längsschlitze der Hülsenelemente ohne großen Kraftaufwand sicherstellen.

Die Steuerflächen können dabei an Verdickungen des Stempels vorgesehen sein, um Jedoch eine besonders schlanke Außenkontur des erfindungsgemäßen Montagewerkzeugs sicherzustellen, ist erfindungsgemäß vorgesehen, daß der Stempel im Bereich des Steuerabschnitts in seinen Seitenflächen Vertiefungen zur Ausbildung der Steuerflächen aufweist, in welche die Greifelemente mit nach innen gerichteten Vorsprüngen eingreifen.

Um mit dem erfindungsgemäßen Montagewerkzeug Hülsenelemente mit nahezu beliebigen Außenumfangskonturen montieren zu können, ist bei einer zweckmäßigen Ausgestaltung der Erfindung vorgesehen, daß daß der Stempel an seinem den abgebogenen Enden der Greifelemente zugewandten Ende eine konvexe Stirnfläche aufweist. Die konvexe Stirnfläche des Stempels ermöglicht dabei insbesondere, daß auch Markierungshülsen mit einer ihrem Längsschlitz gegenüberliegenden ebenen Fläche zum Aufdrucken von Kabelspezifikationen mit dem erfindungsgemäßen Montagewerkzeug auf Kabeln oder Leitern aufgesetzt werden können, ohne daß das Aufweiten des Längsschlitzes beeinträchtigt wird, da die konvexe Stirnfläche eine konkave Durchbiegung der Markierungshülse im Bereich der ebene Fläche zuläßt.

Grundsätzlich ist es möglich, daß die Greifelemente von separaten Federn in ihre nicht aufgespreizte Stellung vorgespannt werden, besonders vorteilhaft ist es jedoch, wenn die Greifelemente Blattfedern sind, die mit ihren von ihren abgebogenen vorderen Enden abgewandten, hinteren Enden an Führungsblöcken einer Haltegabel angebracht sind, wobei die als Greifelemente dienenden Blattfedern jeweils einen hinteren Führungsabschnitt für den Stempel, einen mittleren Steuerabschnitt, der mit dem Steuerabschnitt des Stempels zusammenwirkt, und einen vorderen Greifabschnitt umfassen, wobei die Greifabschnitte zusammen mit der vorderen Stirnfläche des Stempels einen Aufnahmeraum für ein Hülsenelement festlegen.

Bei der Verwendung von Blattfedern als Greifelemente ist es besonders zweckmäßig, wenn die freien Enden der Greifabschnitte der Blattfedern um mehr als 90° nach innen umgebogen sind. Auf diese Weise läßt sich der zuverlässige Eingriff der Blattfedern in den Längsschlitz zum Aufweiten des Hülsenelementes einfach sicherstellen.

Um mit einem erfindungsgemäßen Montagewerkzeug ein Hülsenelement, insbesondere eine längsgeschlitzte Markierungshülse, von dessen Entnahme aus einem Vorratsbereich bis zum Aufsetzten auf ein zu markierendes Kabel oder dergleichen zuverlässig ohne die Gefahr eines Verlustes handhaben zu können, ist bei einem besonders bevorzugten Ausführungsbeispiel der Erfindung vorgesehen, daß die Greifabschnitte der Blattfedern so an die Außenumfangskontur der längsgeschlitzten Hülsenelementen angepaßt ist, daß diese im Aufnahmeraum klemmend gehalten werden.

Die Erfindung wird im folgenden beispielsweise anhand der Zeichnung näher erläutert. Es zeigen:
**Figur 1** eine perspektivische Ansicht eines erfindungsgemäßen Montagewerkzeugs,
**Figur 2** eine perspektivische Ansicht einer Greifgabel des Montagewerkzeugs nach Figur 1,
**Figur 3** eine perspektivische Ansicht eines Stempelträgers des Montagewerkzeugs nach Anspruch 1,
**Figur 4** eine perspektivische Ansicht einer Greifspitze des Montagewerkzeugs nach Figur 1 beim Aufnehmen einer Markierungshülse, wobei der Stempel in die Freigabestellung zurückgezogen ist,
**Figur 5** eine Ansicht der Greifspitze entsprechend Figur 4, wobei sich der Stempel in seiner Mittelstellung befindet und eine Markierungshülse im Aufnahmeraum der Greifspitze angeordnet ist,
**Figur 6** eine Ansicht der Greifspitze entsprechend Figur 4 mit zu markierendem Leiter, wobei der Stempel in seine Montagestellung vorschoben ist und die Markierungshülse im Aufnahmeraum der Greifspitze aufgeweitet ist,
**Figur 7** eine Ansicht der Greifspitze entsprechend Figur 5, wobei die Markierungshülse auf einen Leiter aufgesetzt ist, und
**Figur 8** eine Ansicht der Greifspitze entsprechend Figur 4, wobei die auf den Leiter aufgesetzte Markierungshülse aus dem Aufnahmeraum der Greifspitze freigegeben ist.

In den verschiedenen Figuren der Zeichnung sind einander entsprechende Bauelemente mit gleichen Bezugszeichen versehen.

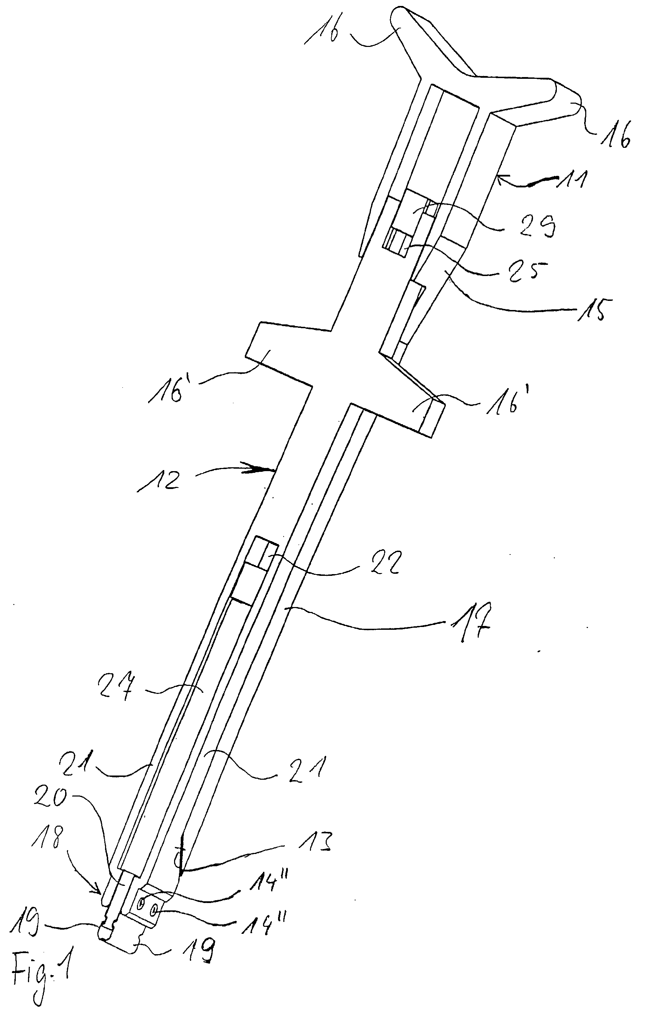

Wie Figur 1 zeigt, weist ein erfindungsgemäßes Montagewerkzeug einen Stempelträger 11 und eine darauf angeordnete Greifgabel 12 auf, die zwischen einem hinteren Anschlag 13 und einem vorderen Anschlag 14, der anhand von Figur 3 unten näher beschrieben wird, verschiebbar ist. Zur Betätigung des Montagewerkzeugs sind im Bereich eines Betätigungsabschnitts 15 Betätigungselemente 16, 16' am Stempelträger 11 bzw. an der Greifgabel 12 vorgesehen. An den Betätigungsabschnitt 15 schließt sich ein Schaftabschnitt 17 an, dessen vom Betätigungsabschnitt 15 abgewandtes Ende eine Greifspitze 18 trägt. Die Greifspitze 18 umfaßt zwei als Greifelemente dienende Blattfedern 19, zwischen denen ein Stempel 20 gleitend verschiebbar geführt ist.

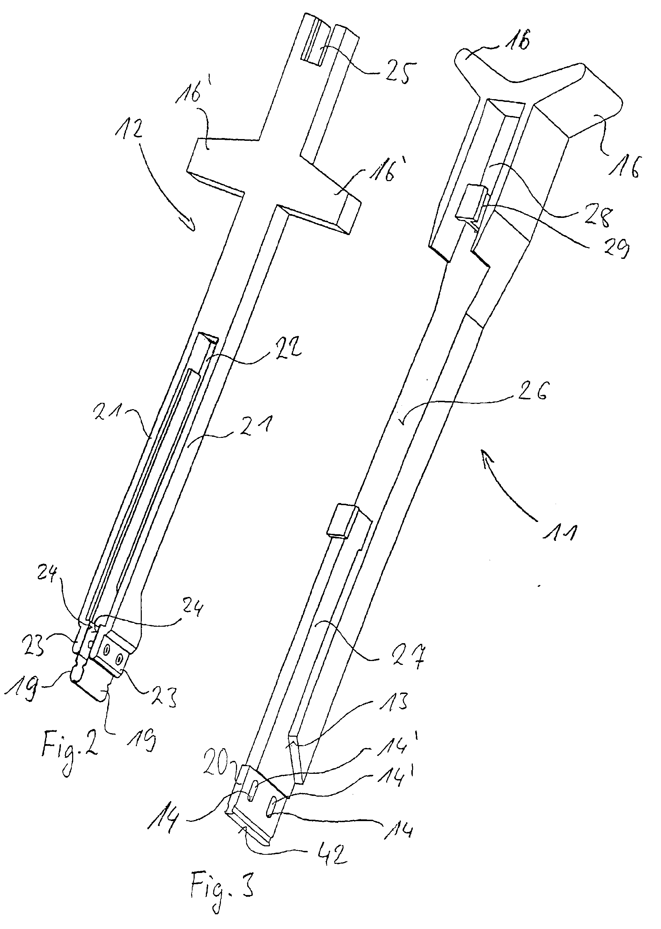

Wie in Figur 2 gezeigt, umfaßt die Greifgabel 12 zwei Gabelarme 21 zwischen denen ein Führungsschlitz 22 vorgesehen ist. Die freien Enden der Gabelarme 21 tragen Führungsblöcke 23 an denen die Blattfedern 19 so befestigt sind, daß ihre einander in einem hinteren Führungsabschnitt gegenüberliegenden Flächen Führungsflächen 24 für den Stempel 20 bilden. Ein weiterer Führungsschlitz 25 zur Aufnahme eines hinteren Führungselements 29 am Stempelträger 11 ist in dem von den Gabelarmen 21 abgewandten Ende der Greifgabel 12 vorgesehen.

Entsprechend Figur 3 umfaßt der Stempelträger 11 eine Auflagefläche 26 für die Greifgabel 12 und eine Führungsschiene 27, die sich vom Schaftbereich bis in den Bereich der Greifspitze 18 erstreckt und die an ihrem vorderen Ende den Stempel 20 trägt. Seitliche Rampen, die neben der Führungsschiene 27 nahe der Greifspitze 18 am Stempelträger 11 vorgesehen sind, bilden den hinteren Anschlag 14 für die Greifgabel 12. Im Bereich des Betätigungsabschnitts 15 Ist eine Führungsnut 28 zur Aufnahme des hinteren Endes der Greifgabel 12 vorgesehen. In der Führungsnut 28 ist das T-förmige Führungselement 29 angeordnet, das von der Auflagefläche 26 vorsteht.

Wie in Figur 1 zu erkennen ist, greift das Führungselement 29 am Stempelträger 11 in den Führungsschlitz 25 der Greifgabel 12 ein, während die den Stempel 20 tragende Führungsschiene 27 des Stempelträgers 11 zwischen den Gabelarmen 21 der Greifgabel 12 im Führungsschlitz 22 verschiebbar geführt ist. Die Greifgabel 12 läßt sich somit auf dem Stempelträger 11 zwischen dem hinteren und dem vorderen Anschlag 13 bzw. 14 verschieben, um auf diese Weise den Stempel 20 relativ zu den Blattfedern 19 zwischen seinen verschiedenen Stellungen hin- und her zu bewegen.

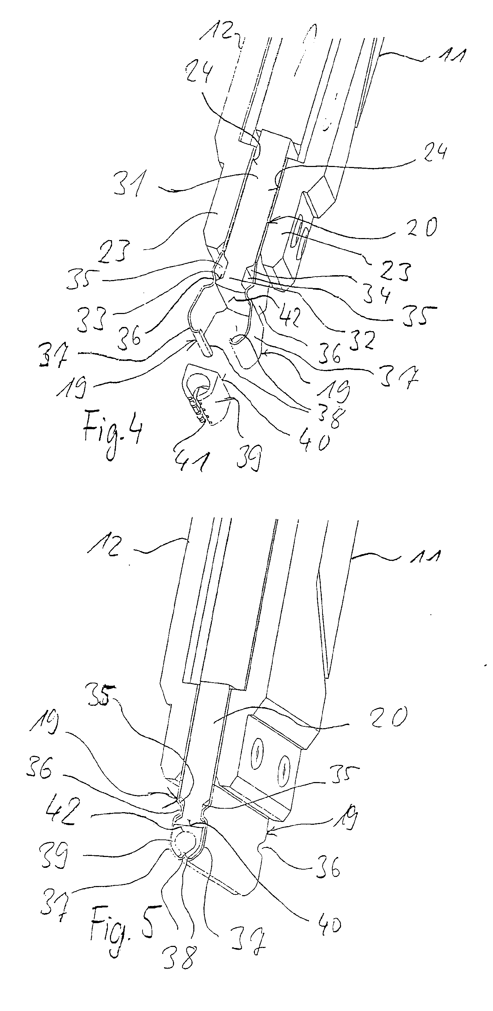

Wie in Figur 4 dargestellt ist, weist der Stempel 20 einen hinteren Führungsabschnitt 31 und einen vorderen Steuerabschnitt 32 auf, in dem zur Ausbildung erster und zweiter Steuerflächen 33, 34 auf beiden Seiten des Stempels 20 Ausnehmungen oder Vertiefungen 35 vorgesehen sind. Im hinteren Führungsabschnitt 31 sind, wie In Figur 3 gezeigt ist, zwei sich in Längsrichtung des Stempels 20 erstreckende Langlöcher 14' vorgesehen, deren vordere Innenendflächen den vorderen Anschlag 14 für die Verschiebung der Greifgabel 12 auf dem Stempelträger 11 bilden und durch die sich in nicht näher dargestellter Weise die Blattfedern 19 an den Führungsblöcken 23 haltende Nieten 14'', Schrauben oder Befestigungsstifte hindurch erstrecken. In diesem Fall halten die Nieten 14'', die den Gegenanschlag zum vorderen Anschlag 14 bilden, auch die Führungsblöcke 23 in einem festen Abstand zueinander, so daß ein Aufspreizen der Greifgabel 12 im Bereich der Greifspitze 18 verhindert werden kann. Es ist jedoch auch denkbar, bei entsprechend steifer Ausbildung der Greifgabel 12, die Blattfedern 19 einzeln an den Führungsblöcken 23 zu befestigen und nach innen vorstehende Vorsprünge vorzusehen, die in die Längsschlitze 14' eingreifen, um als Gegenanschlag zu dienen.

Die Blattfedern 19 weisen nach innen, also zum Stempel 20 hin gerichtete Ausbuchtungen oder Vorsprünge 36 auf, die als Steuerflächenfolger mit den Steuerflächen 33 und 34 am Stempel 20 zusammenwirken und die, wie in Figur 5 gezeigt, in die Vertiefungen 35 am Stempel 20 eingreifen, wenn der Stempel 20 in seiner Mittelstellung ist. Die vorderen, freien Enden der Blattfedern 19 sind zur Ausbildung von Greifabschnitten 37 nach innen, also gegeneinander so umgebogen, daß die freien Enden um mehr als 90° nach innen gebogen sind, so daß Krallkanten 38 vorliegen. Die Kontur der Greifabschnitte 37 der Blattfedern 19 kann jede beliebige, Krallkanten 38 liefernde Formen aufweisen, bevorzugt ist es jedoch, wenn die Kontur der Greifabschnitte 37 an die Kontur eines mit dem erfindungsgemäßen Montagewerkzeug zu handhabenden Hülsenelements, insbesondere an die Kontur einer Markierungshülse 39 angepaßt ist.

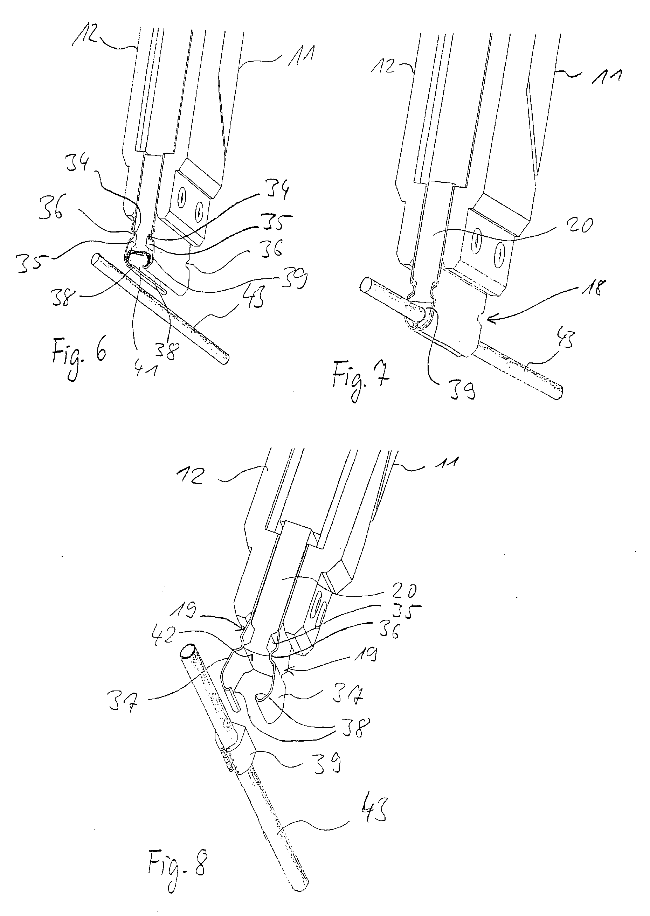

Die Markierungshülse 39 kann zwar ebenfalls jede beliebige Außenumfangsform aufweisen, bevorzugt ist es Jedoch, wenn sie eine ebene oder nahezu ebene Identifikationsträgerfläche 40 zum Aufdrucken einer Kabelspezifikation aufweist. Um, wie später anhand von Figur 6 beschrieben wird, beim Aufspreizen eines Längsschlitzes 41 der Markierungshülse 39 eine konkave Verformung der Identifiktationsträgerfläche 40 nicht zu behindern, weist die den Greifabschnitten 37 zugewandte Stirnfläche 42 des Stempels 20 eine konvexe Form auf.

Im folgenden wird mit Bezug auf die Figuren 4 bis 8 die Handhabung des erfindungsgemäßen Montagewerkzeugs beim Markieren von Kabeln oder Leitern näher erläutert.

Um eine Markierungshülse für ein Kabel aufzunehmen, werden zunächst der Stempel 20 und die als Greifelemente dienenden Blattfedern 19 relativ zueinander verschoben, so daß der Stempel 20 die in Figur 4 dargestellte Freigabestellung einnimmt. Dabei wirken die als Steuerflächenfolger dienenden Vorsprünge 36 mit den ersten Steuerflächen 33 am Stempel 20 zusammen, bis die Vorsprünge 36 auf den Seitenflächen des in seiner Freigabestellung befindliche Stempels 20 aufliegen und die Greifabschnitte 37 auseinander gespreizt sind.

Bei dem hier beschriebenen Montagewerkzeug wird dazu die Greifgabel 12 auf dem Stempelträger 11 nach vorn verschoben, während der Stempel 20 am Stempelträger 11 nicht bewegt wird. Es ist jedoch auch möglich, die Greifgabel 12 als Trägerelement auszubilden und den Stempel 20 an einem darauf verschiebbaren Schlitten oder dergleichen anzuordnen, so daß der Stempel 20 gegenüber den festgehaltenen Blattfedern 19 verschoben wird.

Die Relativbewegung von Blattfedern 19 und Stempel 20 zueinander ist dabei jedoch die gleiche wie oben.

Bei der folgenden Funktionsbeschreibung wird der Einfachheit halber immer von einer Bewegung des Stempels 20 gegenüber den Blattfedern 19 gesprochen.

Sobald die Blattfedern 19 bzw. deren Greifabschnitte 37 auseinander gespreizt sind, wie in Figur 4 gezeigt, ist die Greifspitze 18 des Montagewerkzeugs soweit geöffnet, daß es mit den Greifabschnitten 37 über eine Markierungshülse gedrückt werden kann, die sich dabei noch in einer sogenannten, als Spritzgußteil hergestellten Matte befinden kann. Eine derartige im Spritzgußverfahren hergestellte Matte besteht aus einer Vielzahl in Reihen und Spalten angeordneten Markierungshülsen, die alle an einem Spritzgußträgergitter hängen.

Nachdem die Markierungshülse 39 im Aufnahmeraum zwischen den Greifabschnitten 37 angeordnet ist, wird der Stempel 20 nach vorne in seine Mittelstellung verschoben, wodurch sich einerseits der Abstand zwischen der Stirnfläche 42 des Stempels 20 und den Krallkanten 38 der Greifabschnitte 37 verkürzt und sich andererseits die Greifabschnitte 37 um die Markierungshülse 39 schließen, da die Vorsprünge 36 der Blattfedern 19 in die Vertiefungen 35 in der Kontur des Stempels 20 aufgenommen werden. Wie in Figur 5 gezeigt, ist somit die Markierungshülse 39 sicher und praktisch bei der Montage unverlierbar zwischen den Greifabschnitten 37 der Blattfedern 19 eingeklemmt, wobei die Krallkanten 38 krallenförmig in den Längsschlitz 41 der Markierungshülse 39 eingreifen. Der mit seiner Stirnfläche 42 auf der Identifikationsträgerfläche 40 der Markierungshülse 39 aufliegenden Stempel 20 hält dabei die Markierungshülse 39 gegen die Krallkanten 38 gedrückt.

Während eine ungewollte Bewegung des Stempels 20 in seine Montagestellung durch die Markierungshülse 39 selbst verhindert wird, kann eine ungewollte Bewegung in die Freigabestellung durch die ersten Steuerflächen 33 ausgeschlossen werden, die zu diesem Zweck entsprechend steil ausgebildet sein können. Hierdurch wird eine zuverlässige Handhabung der Markierungshülse 39 auch dann gewährleistet, wenn das erfindungsgemäße Montagewerkzeug mit seiner Greifspitze 18 erst durch enge Bereiche zu einen schwer zugänglichen Leiter 43 geführt werden muß. Es ist jedoch auch denkbar, zwischen Greifgabel 12 und Stempelträger 11 eine Feder vorzusehen, die den Stempel in seine Freigabestellung vorspannt, um die Handhabung und Betätigung des erfindungsgemäßen Montagewerkzeugs zu vereinfachen.

Wird nun der Stempel 20 aus seiner in Figur 5 dargestellten Mittelstellung nach vorne, also in Richtung der Greifabschnitte 37 der Blattfeder 19 gedrückt, so laufen die als Steuerflächenfolger dienenden Vorsprünge 36 gegen die zweiten Steuerflächen 34 am Stempel 20, so daß die Greifabschnitte 37 auseinandergespreizt werden. Gleichzeitigwird die Markierungshülse 39 vom Stempel 20 mit ihren benachbart zum Längsschlitz 41 liegenden Abschnitten in die neben den Krallkanten 38 liegenden Rillen der Greifabschnitte 37 hineingepreßt, so daß die nach außen wandernden Krallkanten 38 den Schlitz 41 der Markierungshülse 39 aufweiten. Ein Ausweichen der Markierungshülse 39 nach hinten wird dabei vom Stempel 20 sicher verhindert, wie in Figur 6 dargestellt ist.

Da bei der relativen Verschiebebewegung des Stempels 20 gegen die Blattfeder 19 in Richtung der Greifabschnitte 37 zusätzlich zu der Federkraft der Blattfedern 19 auch eine dem Aufspreizen der Markierungshülse 39 entgegenwirkende elastische Federkraft der Markierungshülse 39 zu überwinden ist, können eventuell die zweiten Steuerflächen 34 eine etwas geringere Neigung, also einen etwas geringeren Keilwinkel aufweisen als die ersten Steuerflächen 33, um so eine gleichmäßigere Betätigung des erfindungsgemäßen Montagewerkzeugs zu gewährleisten.

Sobald sich der Stempel 20 und die Blattfedern 19 mit der im Aufnahmeraum eingespannten, aufgespreizten Markierungshülsen 39 in der in Figur 6 dargestellten Position befinden, kann die Markierungshülse 39 nun mit dem Montagewerkzeug auf einen in Figur 6 dargestellten Leiter 43 gedrückt werden.

Anschließend wir der Stempel 20 zurück in seine in Figur 7 dargestellte Mittelstellung bewegt, so daß sich die Markierungshülse 39 um den Leiter 43 fest schließt.

Um die auf den Leiter 43 aufgesetzte Markierungshülse 39 aus dem Montagewerkzeug freizugeben, wird der Stempel 20 dann erneut in seine in Figur 8 dargestellte Freigabestellung verschoben, wobei die Markierungshülse 39 beim Aufspreizen den Greifabschnitte 37 außer Eingriff mit den Krallkanten 38 gelangt, da der zurückweichende Stempel 20 eine Vergrößerung der Aufnahmeraums zwischen den Greifabschnitten 37 bewirkt, in die die Markierungshülse 39 ausweichen kann.

Das Werkzeug kann nun von der Markierungshülse 39 abgenommen werden und ist jetzt zum wiederholten Aufnehmen einer weiteren Markierungshülse 39 bereit.

Um eine Markierungshülse 39 von einem Leiter 43 abzunehmen, wird in entsprechender Weise zunächst die Greifspitze 18 des erfindungsgemäßen Montagewerkzeugs durch Bewegung des Stempels 20 in seine Freigabestellung aufgespreizt, um dann die auf dem Leiter 43 befindliche Hülse 39, wie in Figur 7 gezeigt, zu ergreifen. Durch Bewegung des Stempels 20 in seine Montagestellung wird die auf dem Leiter 43 befindliche Markierungshülse 39 dann aufgespreizt und kann vom Leiter 43 abgezogen werden, wie in Figur 6 dargestellt ist.

Die auf diese Weise zurückgewonnene Markierungshülse kann dann falls erforderlich erneut verwendet oder der Abfallentsorgung zugeführt werden.

Das erfindungsgemäße Montagewerkzeug ermöglicht es somit, Kabel auch in schwer zugänglichen Bereichen mit Markierungshülsen zu versehen oder Markierungshülsen von schwer zugänglichen Kabeln zu entfernen. Da die Aufspreizbewegung allein durch eine Relativverschiebung zwischen Stempel und den als Greifelementen dienenden Blattfedern 19 bewirkt wird, kann das erfindungsgemäße Montagewerkzeug relativ lang ausgebildet werden, ohne daß ein in Folge der Länge des Montagewerkzeugs erweiterter Zugriffskanal für das Montagewerkzeug vorgesehen werden müßte.

## Patentansprüche

1. Montagewerkzeug zum Anbringen längsgeschlitzter Hülsenelemente auf strangförmigem Gut, insbesondere zum Anbringen längsgeschlitzter Markierhülsen (39) auf Kabeln (43), **gekennzeichnet durch** zwei einander gegenüberliegende Greifelemente (19), die hakenförmig gegeneinander umgebogene freie Enden (38) aufweisen.

2. Montagewerkzeug nach Anspruch 1, **dadurch gekennzeichnet,** daß die Greifelemente (19) gegen eine Federkraft auseinanderdrückbar sind.

3. Montagewerkzeug nach Anspruch 1 oder 2, **gekennzeichnet durch** einen zwischen den Greifelementen angeordneten Stempel (20).

4. Montagewerkzeug nach Anspruch 3, **dadurch gekennzeichnet,** daß der Stempel ein zwischen den Greifelementen (19) befindliches Hülsenelement (39) so gegen die hakenförmigen Enden (38) der Greifelemente (19) drückt, daß diese In Eingriff mit einem Längsschlitz (41) des Hülsenelements (39) gehalten werden.

5. Montagewerkzeug nach Anspruch 3 oder 4, **dadurch gekennzeichnet,** daß der Stempel verschiebbar ist.

6. Montagewerkzeug nach Anspruch 5, **dadurch gekennzeichnet**, daß der Stempel (20) aus einer Mittelstellung von den hakenförmigen Enden (38) der Greifelemente (19) weg in eine Freigabestellung und zu diesen hin in eine Montagestellung bewegbar ist, wobei der Stempel (20) die Greifelemente (19) sowohl in der Freigabe- als auch in der Montagestellung auseinander drückt.

7. Montagewerkzeug nach Anspruch 6, **dadurch gekennzeichnet**, daß sowohl die Freigabe- als auch die Montagestellung des Stempels (20) durch Anschläge (13, 14) festgelegt sind.

8. Montagewerkzeug nach Anspruch 6 oder 7, **dadurch gekennzeichnet**, daß der Stempel (20) einen Steuerabschnitt (32) mit seitlichen Steuerflächen (33, 34) aufweist, die mit entsprechenden Gegenflä-chen (36) an den Greifelementen (19) zusammenwirken, um die relative Lage der Greifelemente (19) zueinander quer zur Verschieberichtung des Stempels (20) entsprechend der Stellung des Stempels (20) zu steuern.

9. Montagewerkzeug nach Anspruch 8, **dadurch gekennzeichnet**, daß der Stempel (20) im Bereich des Steuerabschnitts (32) in seinen Seitenflächen Vertiefungen (35) zur Ausbildung der Steuerflächen (33, 34) aufweist, in welche die Greifelemente (19) mit nach innen gerichteten Vorsprüngen (36) eingreifen.

10. Montagewerkzeug nach einem der vorstehenden Ansprüche 5 bis 9, **dadurch gekennzeichnet**, daß der Stempel (20) an seinem den abgebogenen Enden (38) der Greifelemente (19) zugewandten Ende eine konvexe Stirnfläche (42) aufweist.

11. Montagewerkzeug nach einem der vorstehenden Ansprüche, **dadurch gekennzeichnet**, daß die Greifelemente Blattfedern (19) sind, die mit ihren von ihren abgebogenen vorderen Enden abgewandten, hinteren Enden an Führungsblöcken (23) einer Greifgabel (12) angebracht sind.

12. Montagewerkzeug nach Anspruch 11, **dadurch gekennzeichnet**, daß die als Greifelemente dienenden Blattfedern (19) jeweils einen hinteren Führungsabschnitt für den Stempel (20), einen mittleren Steuerabschnitt (36), der mit dem Steuerabschnitt (32) des Stempels (20) zusammenwirkt, und einen vorderen Greifabschnitt (37) umfassen, wobei die Greifabschnitte (37) zusammen mit der vorderen Stirnfläche (42) des Stempels (20) einen Aufnahmeraum für ein Hülsenelement (39) festlegen.

13. Montagewerkzeug nach Anspruch 11 oder 12, **dadurch gekennzeichnet**, daß die freien Enden (38) der Greifabschnitte (37) der Blattfedern (19) um mehr als 90° nach innen umgebogen sind.

14. Montagewerkzeug nach Anspruch 11, 12 oder 13, **dadurch gekennzeichnet**, daß die Greifabschnitte (37) der Blattfedern (19) so an die Außenumfangskontour der längsgeschlitzten Hülsenelementen (39) angepaßt ist, daß diese im Aufnahmeraum klemmend gehalten werden.
